# EUROPÄISCHE PATENTANMELDUNG

(11) **EP 2 196 786 A2**
(43) Veröffentlichungstag der Anmeldung: **16.06.2010**
(21) Anmeldenummer: 09014033.6
(22) Anmeldetag: 10.11.2009
(51) Int. Cl.: G01K 1/12, G01K 13/02

(54) **Temperatursensor**

(30) Priorität: 10.11.2008 DE 102008056553
(71) Anmelder: Hella KGaA Hueck & Co., 59552 Lippstadt (DE)
(72) Erfinder: Niemann, Thomas, 27753 Delmenhorst (DE); Sprengel, Holger, 27321 Emtinghausen (DE); Eggers, Torsten, 28215 Bremen (DE)
(74) Vertreter: Siekmann, Gunnar

(57) **Zusammenfassung**

Bei einem Temperatursensor zu Erfassung von Temperaturen über 600 Grad Celsius, insbesondere zur Erfassung einer Abgastemperatur in einem Kraftfahrzeug, mit einem Sensorelement und mit dem Sensorelement verbundenen Zuleitungen, die zumindest abschnittsweise in einem Metallrohr geführt sind, wird in das Metallrohr zur Isolation eine Polymerkeramik eingespritzt, so dass das Metallrohr vollständig ausgefüllt ist. Dadurch wird eine besonders gute thermische Entkopplung erreicht und dadurch auch der statisch-thermische Messfehler reduziert.

## Beschreibung

Die Erfindung betrifft einen Temperatursensor zur Erfassung von Temperaturen über 600 Grad Celsius, insbesondere zur Erfassung einer Abgastemperatur eines Motors, mit einem Sensorelement und mit dem Sensorelement verbundenen Zuleitungen, die zumindest abschnittsweise in einem Metallrohr geführt sind und in dem Metallrohr ein isolierendes Material vorhanden ist.

Ein Temperatursensor der eingangs genannten Art ist aus der DE 199 46 453 B4 und in vergleichbarer Form auch aus der DE 100 62 041 A1 bekannt.

Problematisch ist im Stand der Technik, dass die gesamte Umgebung dieses Temperatursensors sehr heiß ist und dadurch Messfehler entstehen können.

Die Zuleitungen werden dazu in Rohren aus wärmefesten Stahl geführt und zudem wird die elektrische Isolation der Zuleitungen in der Regel über eine mineralisch isolierte Leitung realisiert. Diese mineralische Isolierung ist nur mit großem Aufwand herstellbar. Die Leitungen werden vor der Weiterverarbeitung entsprechend vorbereitet, z. B. abisoliert. Die Isolation erfolgt durch keramische Pulver wie Aluminiumoxid (Al₂O₃) oder Magnesiumoxid (MgO). Diese Stoffe sind zudem stark hygroskopisch. Durch thermische Wechselbelastung besteht auch die Gefahr von Spaltbildungen und damit verbunden das Problem, dass die Isolation nicht mehr zuverlässig ist.

Der Erfindung liegt die Aufgabe zu Grunde, einen Temperatursensor der eingangs genannten Art zu schaffen, der besonders präzise arbeitet.

Die Lösung dieser Aufgabe erfolgt mit einem Temperatursensor mit den Merkmalen des Patentanspruchs 1. Vorteilhafte Weiterbildungen der Erfindung sind in den Unteransprüchen angegeben.

Bei einem Temperatursensor zur Erfassung von Temperaturen über 600 Grad, insbesondere zur Erfassung einer Abgastemperatur in einem Kraftfahrzeug, mit einem Sensorelement und mit dem Sensorelement verbundenen Zuleitungen, die zumindest abschnittsweise in einem Metallrohr geführt sind und in dem Metallrohr ein isolierendes Material vorhanden ist, ist erfindungswesentlich vorgesehen, dass das isolierende Material in dem Metallrohr eine Polymerkeramik ist. Mit einem derartigen Temperatursensor können die Temperaturen heißer Abgase dynamisch erfasst werden. Die Temperatur soll durch eine gute Ankopplung des eigentlichen Sensorelements, das bevorzugt aus Platin hergestellt ist, ausreichend präzise erfasst werden und durch eine ausreichend geringe thermische Ankopplung zu einem Gehäuse, insbesondere dem Metallrohr des Temperatursensors, wird ein geringer statisch-thermischer Messfehler erzielt.

Die Polymerkeramik ist bevorzugt in das Metallrohr eingespritzt. Günstigerweise wird das Metallrohr mit der Polymerkeramik vollständig ausgefüllt. Mit der erfindungsgemäßen Isolierung ist daher eine hohlraumfreie Ausfüllung des Metallrohrs mit der Polymerkeramik möglich. Der Temperatursensor weist bevorzugt mindestens eine Entlüftungsöffnung auf, so dass beim Einspritzen der Polymerkeramik von einem Endbereich die Polymerkeramik das Metallrohr vollständig ausfüllen kann und eventuell eingeschlossene Luft nicht zur Bildung von Hohlräumen führt, sondern durch die Entlüftungsöffnung austreten kann. Die Polymerkeramik weist bevorzugt einen größeren Temperaturausdehnungskoeffizient auf als das für das Metallrohr verwendete Metall. Bevorzugt wird ein wärmefester Stahl, z. B. Inconel 600, verwendet. Durch den größeren Temperaturausdehnungskoeffizient der Polymerkeramik entsteht bei thermischer Wechselbelastung keine Spalte im Isoliermaterial. Im Gegenteil ist die Dichtigkeit jederzeit gewährleistet.

Nachfolgend wird die Erfindung anhand eines in der Zeichnung dargestellten bevorzugten Ausführungsbeispiels weiter erläutert. Im Einzelnen zeigen die schematischen Darstellungen in:
- Fig. 1:: einen erfindungsgemäßen Temperatursensor in einem ersten Montageschritt;
- Fig. 2:: eine Vergrößerung des mit "X" gekennzeichneten Bereichs aus Figur 1;
- Fig. 3:: den vergrößerten Bereich gemäß Figur 2 bei einem nächsten Montageschritt;
- Fig. 4:: den erfindungsgemäßen Temperatursensor in einem weiteren Montageschritt;
- Fig. 5:: den erfindungsgemäßen Temperatursensor im abschließenden Montagezustand.

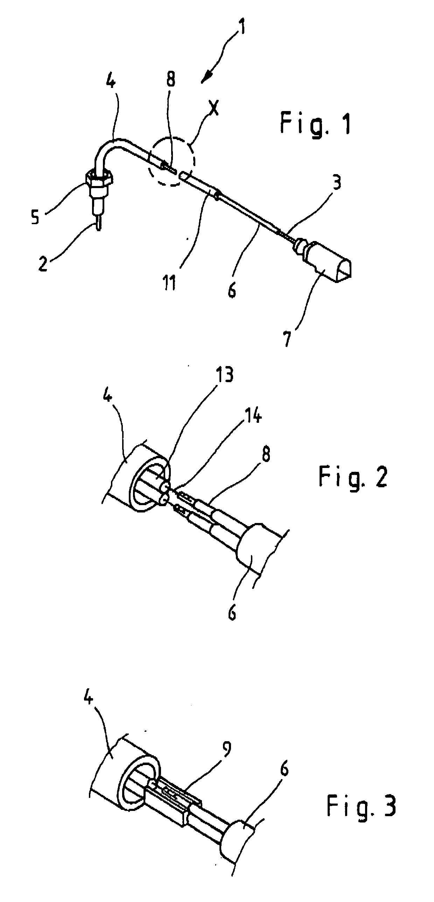

In Figur 1 ist ein Temperatursensor 1 mit einem Sensorelement 2 und Zuleitungen 3 dargestellt, wobei die Zuleitungen 3 zumindest abschnittsweise in einem Metallrohr 4 verlaufen. Das Metallrohr 4 bildet den Abschnitt über der Zuleitung 3 aus, der besonders dicht am eigentlichen Sensorelement 2 angeordnet ist. Hier ist auch eine Überwurfmutter 5 zu erkennen, mit der der Temperatursensor dann im Kraftfahrzeug oder an einem anderen Montageort montiert wird. Im hinteren Bereich ist die Zuleitung 3 nahe einer Mantelleitung 6 mit einem Stecker 7 angeordnet. In dem Bereich der Mantelleitung 6, die an den Abschnitt mit dem Metallrohr 4 angrenzt, ist hier eine Crimphülse 11 dargestellt, die hier noch lose über der Mantelleitung 6 angeordnet ist und später über den Crimpkontakt 8 abgeschoben wird.

Der in der Figur "X" gekennzeichnete Bereich ist in Figur 2 in vergrößerter Ansicht dargestellt. In dem Metallrohr 4 ist eine Zuleitung 14 geführt, die zum eigentlichen Sensorelement 2 führt. Es handelt sich dabei um einen sehr dünnen Leiter 14, der in einem isolierenden Mantel 13 aus Glasseide geführt ist. Genauer gesagt handelt es sich um zwei parallele Zuleitungen 14, die an den Crimpkontakt 8 geschweißt sind, insbesondere lasergeschweißt sind. Der Crimpkontakt 8 ist auf der anderen Seite mit der Zuleitung 3 vercrimpt.

In Figur 3 ist der Bereich gemäß Figur 2 in einem weiteren Vertahrensschritt dargestellt. Über der eben beschriebenen Verbindung mit dem Crimpkontakt 8 ist hier jetzt ein zusätzliches Isolierstück 9 angeordnet. Das Isolierstück 9 ist durch Stege verbunden, die die beiden Crimpkontakte 8 voneinander trennen und isolieren. Das Isolierstück kann einteilig oder mehrteilig ausgebildet sein und dann aus mehreren Teilen zusammenmontiert werden.

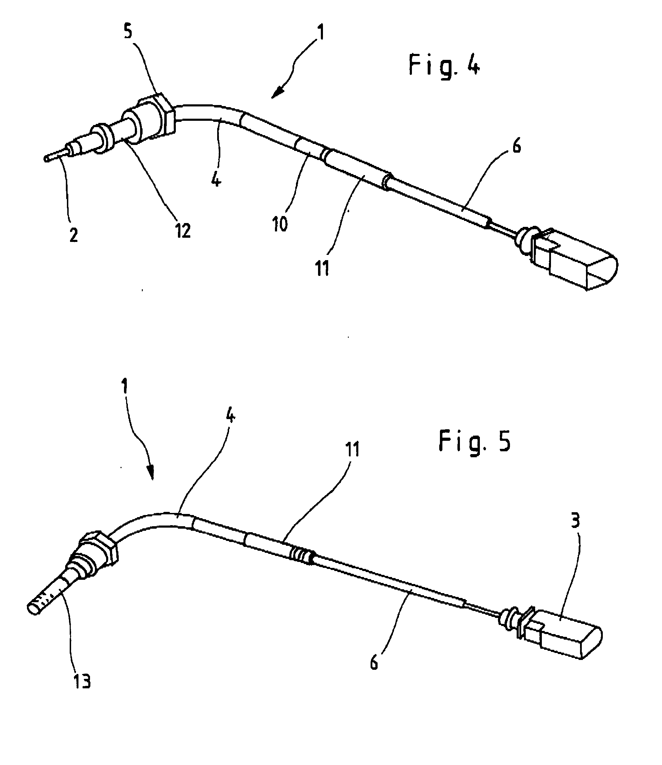

In Figur 4 ist der Temperatursensor mit dem eigentlichen Sensorelement 2 wieder insgesamt dargestellt. Die dahinter angeordnete Überwurfmutter 5, ist über dem Metallrohr 4 angeordnet. In das Metallrohr 4 ist hier eine Polymerkeramik 10 eingespritzt worden. Das Einspritzen erfolgt hier aus dem Verbindungsbereich, der auch in den Figuren 2 und 3 erkennbar ist. Nah benachbart zum Sensorelement 2 ist eine Entlüftungsbohrung 12 vorgesehen, aus der Luft austreten kann, wenn am anderen Ende die Polymerkeramik in das Metallrohr 4 eingespritzt wird. Über dem Crimpkontakt 8 mit dem Isolierstück 9 ist während des Einspritzens eine hier nicht dargestellte Form vorgesehen, so daß auch dieser Bereich mit Polymerkeramik umspritzt ist. Nach Abnahme der Form bleibt die Polymerkeramik 10 in diesem Bereich offen. Danach wird die Crimphülse 11 über den Bereich des Crimpkontakts und des Isolierstücks geschoben und überdeckt dann den offenen Bereich der Polymerkeramik 10.

In Figur 5 ist der Temperatursensor 1 im fertigen Endzustand dargestellt. Das eigentliche Sensorelement 2 ist mit einem Schutzrohr 13 verschweißt worden. Dies erfolgt umlaufend im Laserschweißverfahren. Auch die Crimphülse 11 ist im vorderen Bereich mit dem Metallrohr 4 im Laserschweißverfahren umlaufend verschweißt worden. Im hinteren Bereich ist die Crimphülse 11 auf der Mantelleitung 6 vercrimpt worden.

Der so hergestellte Temperatursensor ist insbesondere innerhalb des Metallrohrs 4 durch die dort lückenlos eingespritzte Polymerkeramik sehr gut thermisch isoliert und auch unanfällig gegen Spaltbildungen bei thermischen Belastungen und insbesondere auch bei Wechselbelastungen. Auf diese Weise kann der Temperatursensor mit einem geringen statisch-thermischen Messfehler auf vergleichsweise einfache Weise hergestellt werden.

## Patentansprüche

1. Temperatursensor zur Erfassung von Temperaturen über 600 Grad Celsius, insbesondere zur Erfassung von Abgastemperaturen in Kraftfahrzeugen, mit einem Sensorelement (2) und mit dem Sensorelement (2) verbundenen Zuleitungen (3), die zumindest abschnittsweise in einem Metallrohr (4) geführt sind und in dem Metallrohr ein isolierendes Material vorhanden ist,
**dadurch gekennzeichnet,**
**dass** das isolierende Material in dem Metallrohr (4) eine Polymerkeramik ist.

2. Temperatursensor nach Anspruch 1, **dadurch gekennzeichnet, dass** die Polymerkeramik in das Metallrohr (4) eingespritzt ist.

3. Temperatursensor nach einem der Ansprüche 1 oder 2, **dadurch gekennzeichnet, dass** das Metallrohr (4) mit der Polymerkeramik vollständig ausgefüllt ist.

4. Temperatursensor nach einem der vorhergehenden Ansprüche, **dadurch gekennzeichnet, dass** der Temperatursensor (1) eine Entlüftungsöffnung (12) aufweist.

5. Temperatursensor nach Anspruch 4, **dadurch gekennzeichnet, dass** die Entlüftungsöffnung (12) in dem Metallrohr (4) benachbart zum Sensorelement (2) angeordnet ist.

6. Temperatursensor nach einem der vorhergehenden Ansprüche, **dadurch gekennzeichnet, dass** die Polymerkeramik einen größeren Temperaturausdehnungskoeffizienten als das für das Metallrohr (4) Metall aufweist.
